(19) Europäisches Patentamt
European Patent Office
Office européen des brevets

(11) **EP 2 761 737 B1**

(12) **EUROPÄISCHE PATENTSCHRIFT**

(45) Veröffentlichungstag und Bekanntmachung des Hinweises auf die Patenterteilung:
**09.12.2015 Patentblatt 2015/50**

(21) Anmeldenummer: **12784537.8**

(22) Anmeldetag: **29.10.2012**

(51) Int Cl.:
***H02P 1/52*** *(2006.01)*

(86) Internationale Anmeldenummer:
**PCT/EP2012/071345**

(87) Internationale Veröffentlichungsnummer:
**WO 2013/068257 (16.05.2013 Gazette 2013/20)**

(54) **VERFAHREN UND ANORDNUNG ZUM BETRIEB VON SYNCHRONMOTOREN**

METHOD AND ASSEMBLY FOR OPERATING SYNCHRONOUS MOTORS

PROCÉDÉ ET DISPOSITIF POUR FAIRE FONCTIONNER DES MOTEURS SYNCHRONES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.11.2011 DE 102011085859**

(43) Veröffentlichungstag der Anmeldung:
**06.08.2014 Patentblatt 2014/32**

(73) Patentinhaber: **Siemens Aktiengesellschaft 80333 München (DE)**

(72) Erfinder: **BENECKE, Marcel 39108 Magdeburg (DE)**

(56) Entgegenhaltungen:
**DE-A1-102004 046 966      DE-A1-102008 057 701 US-A1- 2003 184 170**

**Beschreibung**

Die Erfindung betrifft ein Verfahren zum Betrieb von Synchronmotoren und eine zugehörige Anordnung zum Betrieb von Synchronmotoren mit einem dreiphasigen Drehstromsteller, der an ein Drehstromnetz angeschlossen ist und Halbleitersteller, beispielsweise antiparallel geschaltete Thyristoren, umfasst. Dabei wird insbesondere der Anlauf des Synchronmotors behandelt.

Drehstromsynchronmotoren ohne Anlaufkäfig sind prinzipbedingt an die Frequenz des speisenden Drehstromnetzes gebunden. Ein Anlauf, also Hochfahren solcher Motoren ist daher nicht direkt am Netz möglich. Vielmehr ist zwischen dem Drehstromnetz und der Synchronmaschine eine Einrichtung nötig, die das Hochfahren erst ermöglicht. Hierzu wird üblicherweise ein Frequenzumrichter verwendet. Der Frequenzumrichter besteht aus einem Gleichrichter, einem Zwischenkreis(-kondensator) und einem Wechselrichter. Er wird verwendet, um einen Drehstrom mit einstellbarer Frequenz zu erzeugen.

Es ist Aufgabe der Erfindung, ein Verfahren und eine Anordnung anzugeben, mit denen bei sehr geringem Aufwand an leistungselektronischen Bauelementen ein Betrieb einer Synchronmaschine an einem Drehstromnetz ermöglicht wird. Dabei soll insbesondere das Anlaufen der Synchronmaschine ermöglicht werden.

Die Aufgabe wird durch ein Verfahren mit den Merkmalen von Anspruch 1 gelöst. Eine weitere Lösung besteht in einer Anordnung gemäß dem Anspruch 7. Weiterbildungen der Erfindung sind in den abhängigen Ansprüchen angegeben.

Bei dem erfindungsgemäßen Verfahren zum Betrieb einer Synchronmaschine mittels eines drei Halbleitersteller umfassenden dreiphasigen Drehstromstellers, der an ein Drehstromnetz angeschlossen wird, werden folgende Schritte durchgeführt:

Es erfolgt eine Bestimmung eines ersten Parameters in Form der Phasendifferenz zwischen Polradspannung der Synchronmaschine und Netzspannung des Drehstromnetzes. Dies kann beispielsweise durch Messung der Drehstromnetz-Spannung und Polradspannung und entsprechenden Vergleich erfolgen. Weiterhin wird eine Bestimmung der Drehzahl des Rotors der Synchronmaschine als zweiten Parameter durchgeführt. Als dritter Parameter wird die Phasenlage des Drehstromnetzes bestimmt. Mit anderen Worten wird ermittelt, wie weit der aktuelle Zeitpunkt vom letzten Nulldurchgang einer der Phasenspannungen entfernt liegt. Als vierter Parameter wird wenigstens ein Teil der Statorströme, bevorzugt alle drei Statorströme, ermittelt. Die aufgeführten Parameter können dabei durch andere, physikalisch äquivalente Parameter ersetzt werden.

Ausgehend von den vier Parametern wird eine Vorausberechnung des Drehmomentverlaufs für die Synchronmaschine für einen festlegbaren Zeitraum bei Anschaltung wenigstens zweier der Halbleitersteller unter Berücksichtigung der bestimmten Werte für Phasendifferenz, Drehzahl, Statorstrom und Phasenlage durchgeführt. Anhand der Vorausberechnung wird ein Schaltzeitpunkt bestimmt, an dem die wenigstens zwei Halbleitersteller angeschaltet werden. Zweckmäßig wird dazu die Entscheidungskennzahl mit einem festlegbaren Schwellwert verglichen, um einen Schaltzeitpunkt zu ermitteln. Bevorzugt ergibt sich dieser Zeitraum bei der Verwendung von Thyristoren im Drehstromsteller aus dem automatischen Verlöschen sämtlicher Thyristoren beim jeweiligen Nulldurchgang des Stroms.

Hierdurch wird vorteilhaft erreicht, dass nur zu solchen Schaltzeitpunkten eine Einschaltung der Halbleitersteller vorgenommen wird, zu denen ein insgesamt positiver Drehmomentverlauf erwartet wird, also ein insgesamt beschleunigendes Drehmoment. Bremsendes Drehmoment wird vermieden. Dabei ist aber eben nicht die Verwendung eines Frequenzumrichters nötig, sondern es wird lediglich der Drehstromsteller verwendet.

Dabei wird gemäß einer vorteilhaften Ausgestaltung der Erfindung anhand der Vorausberechnung ermittelt, ob der gegenwärtige Zeitpunkt als Schaltzeitpunkt verwendet wird. Mit anderen Worten wird anhand der ermittelten Parameter stets für den aktuellen Zeitpunkt, also jetzt, entschieden, ob die Halbleitersteller angeschaltet werden. Das Verfahren wird dann zweckmäßig regelmäßig in möglichst geringen zeitlichen Abständen, beispielsweise in Abständen von 1 ms, ausgeführt.

In einer Ausgestaltung der Erfindung wird ein maximal auftretender Strom berücksichtigt, der sich bei Anschaltung der Drehstromsteller ergibt. Alternativ oder zusätzlich ist es möglich, ein mittleres Drehmoment über die Anschaltzeit zu berücksichtigen.

In einer vorteilhaften Weiterbildung der Erfindung werden Drehmomentverläufe für die Anschaltung aller Hälbleitersteller sowie für die Anschaltung der drei Paare von je zwei Halbleiterstellern vorausberechnet. Es ist auch möglich, nur einen Teil dieser vier verschiedenen Möglichkeiten zu berücksichtigen. Für alle diese Drehmomentverläufe wird die Vorausberechnung durchgeführt. Die Ergebnisse werden dann untereinander und beispielsweise mit einem Schwellwert verglichen und entschieden, ob ein Schaltzeitpunkt vorliegt oder nicht und in diesem Fall entschieden, welche Halbleitersteller angeschaltet werden.

Auf diese Weise werden die Möglichkeiten zur Anschaltung der Halbleitersteller deutlich erweitert, da auch der Betrieb nur zweier der Halbleitersteller gleichzeitig berücksichtigt wird. Zugleich kann auch dann, wenn bereits zwei der Halbleitersteller angeschaltet sind und Strom fließt, ständig geprüft werden, ob die Zuschaltung auch des dritten Halbleiterstellers den zu erwartenden Drehmomentverlauf verbessern würde.

Die erfindungsgemäße Anordnung zum Betrieb einer Synchronmaschine ist ausgestaltet zur Durchführung des beschriebenen Verfahrens. Sie umfasst einen dreiphasigen Drehstromsteller, der an ein Drehstromnetz anschließbar ist und drei Halbleitersteller für die Phasen des Drehstromnetzes umfasst. Weiterhin umfasst die Anordnung:

- eine Einrichtung zur Bestimmung der Phasendifferenz zwischen Polradspannung der Synchronmaschine und Netzspannung des Drehstromnetzes,
- eine Einrichtung zur Bestimmung der Drehzahl des Rotors der Synchronmaschine,
- eine Einrichtung zur Bestimmung der Phasenlage des Drehstromnetzes,
- einer Einrichtung zur Bestimmung wenigstens eines Teils der Statorströme,
- einer Steuerungseinrichtung, ausgestaltet, aus den bestimmten Werten einen Drehmomentverlauf für die Synchronmaschine für einen festlegbaren Zeitraum bei Anschaltung wenigstens eines Teils der Halbleitersteller vorauszuberechnen und anhand der Vorausberechnung einen Schaltzeitpunkt zu ermitteln, zu dem die Halbleitersteller angeschaltet werden.

Der Drehstromsteller umfasst zumindest drei Halbleitersteller mit Halbleiterschaltelementen. Bei den Halbleiterschaltelementen kann es sich beispielsweise um Wechselstromsteller handeln. Die Wechselstromsteller können beispielsweise als Paare antiparallel geschalteter Thyristoren oder als Triacs realisiert sein. Es könnten aber auch IGBTs oder andere Typen von Halbleiterschaltern verwendet werden. Der Drehstromsteller ist an ein Drehstromnetz angeschlossen. Die Ständerwicklung des Synchronmotors ist dabei bevorzugt in Sternschaltung ohne Neutralleiter verschaltet. Die Wechselstromsteller werden zu bestimmten Zeitpunkten aktiviert bzw. gezündet, d.h. leitend geschaltet oder zur Leitung vorbereitet.

Bei der Einrichtung zur Bestimmung der Drehzahl des Rotors der Synchronmaschine kann es sich beispielsweise um eine Einrichtung zur Bestimmung des mechanischen Lagewinkels des Rotors handeln. Der mechanische Lagewinkel gibt zweckmäßig die Lage des Rotors in Bezug auf eine festlegbare raumfeste Position an. Der Lagewinkel erstreckt sich dabei zweckmäßigerweise von 0° bis 360°. Aus der zeitlichen Änderung des Lagewinkels wird auf die Drehzahl geschlossen.

Weiterhin wird die Phasenlage des Drehstromnetzes in wenigstens einer der Phasen der Ständerwicklung ermittelt. Hierbei können auch verschiedene Meßmethoden verwendet werden. Für das beschriebene Verfahren und die Einrichtung kommt es darauf an, den zeitlichen Abstand vom letzten Nulldurchgang der Spannung einer Phase zu ermitteln. Dieser Abstand kann als Winkel oder Zeit oder auf andere Weise dargestellt, ermittelt und verwendet werden.

Das beschriebene Verfahren wird insbesondere softwaremäßig realisiert. Bezogen auf die beschriebene Einrichtung weist diese insbesondere eine Steuereinheit auf, die ausgestaltet ist, das beschriebene Vorgehen umzusetzen. Es kann daher einfach in bestehenden Drehstromstellern ohne zusätzlichen Aufwand an Bauelementen implementiert werden. Dabei ist eine Erfassung der Rotordrehzahl nötig. Vorteilhaft ist es, wenn eine in der Synchronmaschine vorgesehene Steuereinheit, die heute zweckmäßig als Mikroprozessor realisiert ist, die Steuerung des Drehstromstellers übernimmt. In diesem Fall liegen Daten von beispielsweise einem in der Synchronmaschine integrierten Lagegeber bereits automatisch vor. Weiterhin kann eine solche Synchronmaschine bereits den Drehstromsteller umfassen, also als Gesamteinheit realisiert sein, die somit direkt an ein Drehstromnetz anschließbar ist.

Ein bevorzugtes, jedoch keinesfalls einschränkendes Ausführungsbeispiel für die Erfindung wird nunmehr anhand der Zeichnung näher erläutert. Dabei sind die Merkmale schematisiert dargestellt und sich entsprechende Merkmale sind mit gleichen Bezugszeichen markiert. Die Figuren zeigen dabei im Einzelnen:

Figur 1    ein Ersatzschaltbild eines Drehstromstellers mit angeschlossener Synchronmaschine,
Figur 2    ein Verlaufsdiagramm für Statorströme nach Einschaltung von Halbleiterstellern,
Figur 3    ein Ablaufdiagramm für ein Verfahren zum Betrieb der Synchronmaschine.

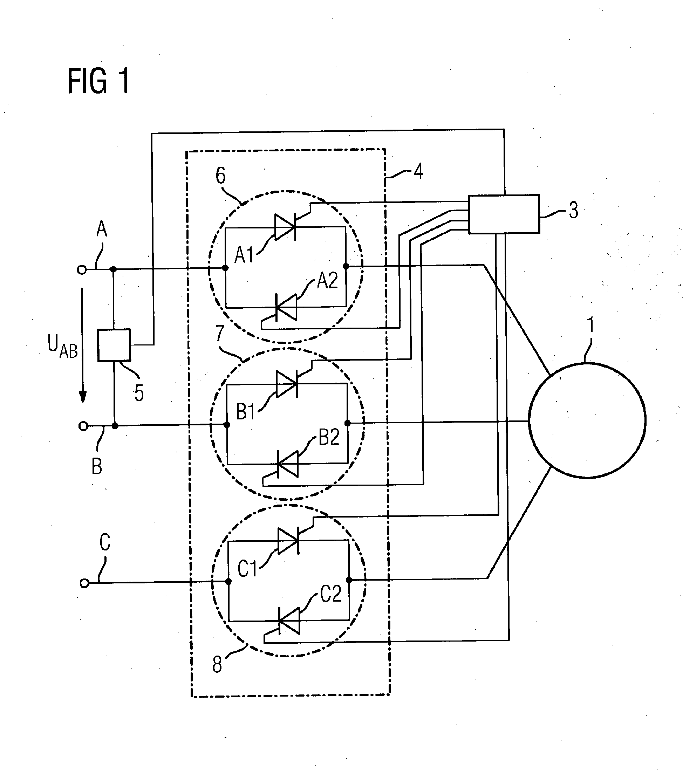

In Figur 1 ist eine Drehstrom-Synchronmaschine 1 über einen dreiphasigen Drehstromsteller 4 an die Phasen A, B, C eines Drehstromnetzes angeschlossen. Jeder der Phasen A, B, C ist ein Halbleitersteller 6, 7, 8 aus zwei antiparallel geschalteten Thyristoren A1, A2, B1, B2, C1, C2 zugeordnet. Die Zündelektroden der Thyristoren A1, A2, B1, B2, C1, C2 sind an eine Steuereinrichtung 3 angeschlossen, mit der die zum Zünden der Thyristoren A1, A2, B1, B2, C1, C2 erforderlichen Zündsignale bereitgestellt werden. Die Steuereinrichtung 3 ist durch einen Mikrocontroller realisiert. Zwischen zwei Phasen A, B, C des Netzes, beispielsweise zwischen den Klemmen A und B des Netzes in Figur 1, ist eine Spannungsmesseinrichtung 5 geschaltet, an deren Ausgang die zwischen diesen beiden Klemmen A und B auftretende Netzspannung $U_{AB}$ bereitsteht. Weitere, nicht gezeigte Spannungsmesseinrichtungen können ebenfalls für die anderen beiden Phasenpaare vorliegen.

In einer Ausführungsvariante sind die Steuereinrichtung 3 und der Drehstromsteller 4 eine von der Drehstrom-Synchronmaschine 1 separate Einheit, also als separate Motorsteuereinrichtung realisiert. In einer zweiten Ausführungsvariante sind die Steuereinrichtung 3 und der Drehstromsteller 4 Teil der Drehstrom-Synchronmaschine 1. In diesem Fall sind zweckmäßig die Funktionen der Steuereinrichtung 3 in einen bereits vorhandenen Mikroprozessor in der Drehstrom-Synchronmaschine 1 integriert. Im vorliegenden Ausführungsbeispiel dient die Steuereinrichtung 3 dazu, ein geeignetes Programm zu bearbeiten, mit dem softwaremäßig der Betrieb der Einrichtung erfolgen kann.

Zur Beschleunigung der Synchronmaschine aus dem Stillstand ist beschleunigendes Drehmoment erforderlich. Hierfür ist es notwendig, die Statorwicklung derart zu bestromen, dass positives Drehmoment (inneres Drehmoment) erzeugt wird, welches sowohl eine Beschleunigung der Maschine bewirkt, als auch das Gegenmoment der Last kompensiert. Das innere Drehmoment ist nach der Gleichung 1 neben den Strömen auch von der Rotorlage abhängig.

$$m_i = \frac{3}{2} p \cdot \psi_p \cdot \left( i_{1A} \cdot \left(-\sin \vartheta_R\right) + \left(i_{1B} - i_{1C}\right) \cdot \cos \vartheta_R \cdot \frac{1}{\sqrt{3}} \right)$$

Dabei ist $m_i$ das innere Drehmoment, p die Polpaarzahl, in Statorströme 21, 22, 23, $\vartheta_R$ die Rotorlage.

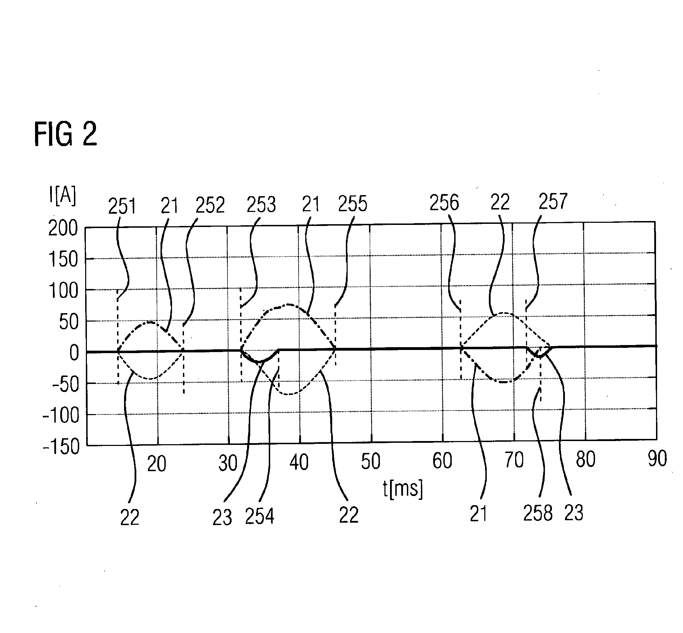

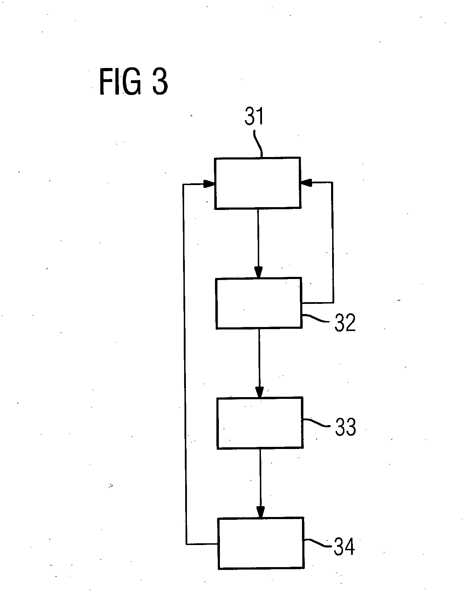

Um durch Zündung der Thyristoren zu einem bestimmten Zeitpunkt Statorströme 21, 22, 23 zu erzeugen, die einen günstigen Drehmomentverlauf liefern, werden die Statorströme 21, 22, 23 und das Drehmoment für bestimmte Parameterkonstellationen berechnet. Die verwendeten Parameter sind die Drehzahl, die Phasenlage der Netzspannung und der durch den Rotor induzierten Spannung sowie die vorhandenen Statorströme 21, 22, 23. Dabei wird ein Verfahrensablauf wie in Figur 3 dargestellt durchgeführt. Figur 2 zeigt zugehörige beispielhafte Verläufe der Statorströme 21, 22, 23, wobei ein erster bis achter Zeitpunkt 251...258 markiert sind.

In einem ersten Schritt 31 werden die oben bezeichneten Parameter Drehzahl, die Phasenlage der Netzspannung und der durch den Rotor induzierten Spannung sowie die vorhandenen Statorströme 21, 22, 23 gemessen.

In einem zweiten Schritt 32 wird bestimmt, ob die Thyristoren A1, A2, B1, B2, C1, C2 in den Halbleiterstellern 6, 7, 8 noch alle gezündet sind, indem der gemessene Stromfluss betrachtet wird. Sind noch alle Statorströme, ungleich Null, so wird zurückgekehrt zu Schritt 31. In den Stromverläufen, die in Figur 2 dargestellt sind, ist dies beispielsweise zwischen dem dritten Zeitpunkt 253 und dem vierten Zeitpunkt 254 der Fall. Eine weitere Zündung kann hier nicht erfolgen und eine Abschaltung der Thyristoren A1, A2, B1, B2, C1, C2 ist prinzipbedingt nicht möglich. Daher kann die Steuerung hier nicht eingreifen. Im Zeitbereich zwischen dem siebten und achten Zeitpunkt 257, 258 wird ebenfalls zum ersten Schritt 31 zurückgekehrt.

Ansonsten wird aus den gemessenen Parametern unter der Voraussetzung der Anschaltung aller Halbleitersteller 6, 7, 8 der sich ergebende Drehmomentverlauf berechnet. Da in den Halbleiterstellern 6, 7, 8 dieses Beispiels Thyristoren A1, A2, B1, B2, C1, C2 verwendet werden, ergibt sich für die Berechnung durch das automatische Verlöschen der Thyristoren A1, A2, B1, B2, C1, C2 ein endlicher Berechnungs-Zeitraum, bis alle Ströme und das Drehmoment Null werden. Ist der aktuelle Zeitpunkt beispielsweise im Bereich nicht allzu weit nach dem dritten Zeitpunkt 253, so ergibt sich automatisch ein Berechnungs-Zeitraum bis zum fünften Zeitpunkt 255.

Aus dem Drehmomentverlauf für den gesamten Berechnungs-Zeitraum wird durch Betrachtung des durchschnittlichen Drehmoments eine Entscheidungskennzahl ermittelt. Konkret wird im vorliegenden Beispiel errechnet, ob das durchschnittliche sich ergebende Drehmoment größer als Null ist, also im Mittel eine Beschleunigung zu erwarten ist. Zusätzlich wird hierzu geprüft, ob im Drehmomentverlauf ein negativer Schwellwert für das Drehmoment nicht unterschritten wird.

In einem dritten Schritt 33 wird bestimmt, ob noch Thyristoren A1, A2, B1, B2, C1, C2 gezündet sind, indem wiederum der gemessene Stromfluss betrachtet wird. Ist derzeit kein Thyristor gezündet, so wird aus den Parametern der sich ergebende Drehmomentverlauf berechnet, allerdings jetzt unter der Voraussetzung der Anschaltung von nur je zwei der drei Halbleitersteller 6, 7, 8. Es ergeben sich drei verschiedene Drehmomentverläufe, für die jeweils eine Entscheidungskennzahl ermittelt wird analog zum zweiten Schritt 32. Ein Beispiel für eine solche Zündung der Thyristoren A1, A2, B1, B2, C1, C2 ist im Bereich zwischen dem ersten und zweiten Zeitpunkt 251, 252 sowie zwischen dem sechsten und siebten Zeitpunkt 256, 257 gegeben.

In einem vierten Schritt 34 wird ein Vergleich der Entscheidungskennzahlen untereinander und mit einem Schwellwert vorgenommen und somit entschieden, ob eine Zündung vorgenommen wird und wenn ja, welche Kombination von Halbleiterstellern 6, 7, 8 angeschaltet wird. Wird eine Kombination von Halbleiterstellern 6, 7, 8 angeschaltet ermittelt, deren Zündung zu einem brauchbaren Drehmomentverlauf führt, so wird die entsprechende Ansteuerung der Thyristoren A1, A2, B1, B2, C1, C2 vorgenommen. Daraufhin wird zum ersten Schritt 31 zurückgekehrt.

Die Berechnung wird im vorliegenden Beispiel in zeitlichen Abständen von ca. 1 ms durchgeführt. Durch die ständige Neuberechnung auch im Verlauf des Stromflusses, der sich nach einer Zündung von zwei der drei Halbleitersteller 6, 7, 8 ergibt, kann auch eine nachträgliche Anschaltung des dritten der Halbleitersteller 6, 7, 8 erfolgen, wenn diese einen verbesserten Drehmomentverlauf erwarten lässt als das Belassen bei zwei angeschalteten Halbleiterstellern 6, 7, 8. Dies ist beispielhaft beim siebten Zeitpunkt 257 der Fall. Zu diesem Zeitpunkt ermittelt die Steuereinrichtung 3, dass eine Zuschaltung des verbleibenden Halbleiterstellers 6, 7, 8 vorteilhaft für die Beschleunigung der Synchronmaschine 1 ist. Die Zuschaltung wird daraufhin vorgenommen und es ergibt sich ein dreiphasiger Stromfluss für die verbleibende Zeit bis zum achten Zeitpunkt 258.

Ist die Nenndrehzahl der Synchronmaschine 1 erreicht, so ist eine Überführung in einen netzsynchronen Betrieb sinnvoll. Hierzu wird im vorliegenden Beispiel ein zusätzlicher Referenzwert $m_{ref}$ berechnet, der bei der Steuerung der Halbleitersteller 6...8 berücksichtigt wird. Der Wert $m_{ref}$ ist dabei die Summe aus Teilwerten $m_{speed}$ und $m_{pre}$. $m_{speed}$ wiederum berechnet sich aus dem relativen Abstand $\Delta n$ der aktuellen Drehzahl $n_{ist}$ von der Nenndrehzahl $n_{synch}$ sowie Maschinenkonstanten. Zusätzlich wird $m_{speed}$ Filterung bezüglich maximaler und minimaler Werte unterzogen.

$$m_{speed} = K_m \cdot \frac{\Delta n}{n_{synch}}$$

$m_{pre}$ berechnet sich wie folgt:

$$m_{pre} = \left(1 - \frac{\Delta n}{n_{synch}}\right) \cdot \sin(\Delta \vartheta)$$

Auch $m_{pre}$ wird noch mit Maschinenkonstanten verrechnet und enthält wiederum den relativen Abstand $\Delta n$ der aktuellen Drehzahl $n_{ist}$ von der Nenndrehzahl $n_{synch}$. Die Summe $m_{ref}$ wird in der Steuereinrichtung 3 als Obergrenze für das zu erzeugenden Drehmoment gewertet. Ist der Wert $m_{ref}$ beispielsweise kleiner als Null, soll keinerlei positives Drehmoment erzeugt werden. Da die Steuereinrichtung 3 negative Drehmomente ohnehin nicht erzeugt, findet bei negativem $m_{ref}$ keinerlei Zündung der Thyristoren A1, A2, B1, B2, C1, C2 statt. Dadurch wird bei Drehzahlen oberhalb der Nenndrehzahl eine weitere Beschleunigung verhindert.

## Patentansprüche

1. Verfahren zum Betrieb einer Synchronmaschine (1) mittels eines drei Halbleitersteller (6, 7, 8) umfassenden dreiphasigen Drehstromstellers (4), der an ein Drehstromnetz angeschlossen wird, mit folgenden Schritten:

- Bestimmung der Phasendifferenz zwischen Polradspannung der Synchronmaschine (1) und Netzspannung des Drehstromnetzes,
- Bestimmung der Drehzahl des Rotors der Synchronmaschine,
- Bestimmung der Phasenlage des Drehstromnetzes, d.h. es wird ermittelt, wie weit der aktuelle Zeitpunkt vom letzten Nulldurchgang einer der Phasenspannungen entfernt leigt,
- Bestimmung wenigstens eines Teils der Statorströme (21, 22, 23) der Synchronmaschine (1),
- Vorausberechnung des Drehmomentverlaufs für die Synchronmaschine (1) für einen festlegbaren Zeitraum bei Anschaltung wenigstens zweier der Halbleitersteller (6, 7, 8) unter Berücksichtigung der bestimmten Werte für Phasendifferenz, Drehzahl, Statorstrom und Phasenlage,
- Bestimmung von einem Schaltzeitpunkt anhand der Vorausberechnung, wobei zu dem Schaltzeitpunkt die wenigstens zwei Halbleitersteller (6, 7, 8) angeschaltet werden.

2. Verfahren gemäß Anspruch 1, bei dem anhand der Vorausberechnung ermittelt wird, ob der gegenwärtige Zeitpunkt als Schaltzeitpunkt verwendet wird.

3. Verfahren gemäß Anspruch 1 oder 2, bei dem aus der Vorausberechnung eine Entscheidungskennzahl bestimmt wird, und die Entscheidungskennzahl mit einem festlegbaren Schwellwert verglichen wird, um den Schaltzeitpunkt zu ermitteln.

4. Verfahren gemäß einem der vorangehenden Ansprüche, bei dem ein maximal im Zeitraum auftretender Strom mitberechnet und berücksichtigt wird, der sich bei Anschaltung der wenigstens zwei Halbleitersteller (6, 7, 8) für die ermittelte Phasendifferenz, Phasenlage, Statorstrom (21, 22, 23) und Drehzahl ergibt.

5. Verfahren gemäß einem der vorangehenden Ansprüche, bei dem eine Vorausberechnung der Drehmomentverläufe sowohl für die Anschaltung aller Halbleitersteller (6, 7, 8) als auch für die Anschaltung der drei Paare von je zwei Halbleiterstellern (6, 7, 8) durchgeführt wird.

**6.** Verfahren gemäß einem der vorangehenden Ansprüche, bei dem anhand der Phasendifferenz und der Drehzahl ein maximaler Drehmomentwert bestimmt wird und der maximale Drehmomentwert so berücksichtigt wird, dass keine Anschaltung der Halbleitersteller (6, 7, 8) vorgenommen wird, wenn die Vorausberechnung ein zu erwartendes Drehmoment oberhalb des maximalen Drehmomentwerts ergibt.

**7.** Anordnung zum Betrieb einer Synchronmaschine (1), augestaltet zur Durchführung eines Verfahrens gemäß einem der vorangehenden Ansprüche, mit

- einem dreiphasigen Drehstromsteller (6, 7, 8), der an ein Drehstromnetz anschließbar ist und drei Halbleitersteller (6, 7, 8) für die Phasen (A, B, C) des Drehstromnetzes umfasst,
- einer Einrichtung zur Bestimmung der Phasendifferenz zwischen Polradspannung der Synchronmaschine und Netzspannung des Drehstromnetzes,
- einer Einrichtung zur Bestimmung der Drehzahl des Rotors der Synchronmaschine,
- einer Einrichtung zur Bestimmung der Phasenlage des Drehstromnetzes, d.h. es wird ermittelt, wie weit der aktuelle Zeitpunkt vom letzten Nulldurchgang einer der Phasenspannungen entfernt leigt,
- einer Einrichtung zur Bestimmung wenigstens eines Teils der Statorströme,
- einer Steuerungseinrichtung, ausgestaltet, aus den bestimmten Werten einen Drehmomentverlauf für die Synchronmaschine (1) für einen festlegbaren Zeitraum bei Anschaltung wenigstens eines Teils der Halbleitersteller (6, 7, 8) vorauszuberechnen und anhand der Vorausberechnung einen Schaltzeitpunkt zu ermitteln, zu dem die Halbleitersteller (6, 7, 8) angeschaltet werden.

**8.** Anordnung gemäß Anspruch 7, bei der die Halbleitersteller (6, 7, 8) Thyristoren (A1, A2, B1, B2, C1, C2) umfassen.

**Claims**

**1.** Method for operating a synchronous machine (1) by means of a three-phase power controller (4) comprising three semiconductor controllers (6, 7, 8) which is connected to a three-phase network, having the following steps:

- determination of the phase difference between magnet-wheel voltage of the synchronous machine (1) and network voltage of the three-phase network,
- determination of the rotational speed of the rotor of the synchronous machine,
- determination of the phase position of the three-phase network, i.e. it is ascertained how far the current point in time is removed from the most recent zero crossing of one of the phase voltages,
- determination of at least some of the stator currents (21, 22, 23) of the synchronous machine (1),
- advance calculation of the torque curve for the synchronous machine (1) for a definable period of time in the event of activation of at least two of the semiconductor controllers (6, 7, 8) while taking into account the determined values for phase difference, rotational speed, stator current and phase position,
- determination of a switching time point on the basis of the advance calculation, in which case the at least two semiconductor controllers (6, 7, 8) are activated at the switching time point.

**2.** Method according to claim 1, wherein the advance calculation is used as the basis for ascertaining whether the present point in time is employed as a switching time point.

**3.** Method according to claim 1 or 2, wherein a decision characteristic number is determined from the advance calculation and the decision characteristic number is compared with a definable threshold value in order to ascertain the switching time point.

**4.** Method according to one of the preceding claims, wherein included in the calculation and taken into consideration is a maximum current occurring in the period of time, said maximum current occurring on activation of the at least two semiconductor controllers (6, 7, 8) for the ascertained phase difference, phase position, stator current (21, 22, 23) and rotational speed.

**5.** Method according to one of the preceding claims, wherein an advance calculation of the torque curves is performed both for the activation of all semiconductor controllers (6, 7, 8) and also for the activation of the three pairs each comprising two semiconductor controllers (6, 7, 8).

6. Method according to one of the preceding claims, wherein a maximum torque value is determined on the basis of the phase difference and the rotational speed and the maximum torque value is taken into consideration such that no activation of the semiconductor controllers (6, 7, 8) is carried out if the advance calculation results in an expected torque above the maximum torque value.

7. Assembly for operating a synchronous machine (1), designed in order to execute a method according to one of the preceding claims, comprising

- a three-phase power controller (6, 7, 8) which can be connected to a three-phase network and comprises three semiconductor controllers (6, 7, 8) for the phases (A, B, C) of the three-phase network,
- a device for determining the phase difference between magnet-wheel voltage of the synchronous machine and network voltage of the three-phase network,
- a device for determining the rotational speed of the rotor of the synchronous machine,
- a device for determining the phase position of the three-phase network, i.e. it is ascertained how far the current point in time is removed from the most recent zero crossing of one of the phase voltages,
- a device for determining at least some of the stator currents,
- a control facility designed in order to calculate in advance from the values determined a torque curve for the synchronous machine (1) for a definable period of time on activation of at least some of the semiconductor controllers (6, 7, 8) and on the basis of the advance calculation to ascertain a switching time point at which the semiconductor controllers (6, 7, 8) are activated.

8. Assembly according to claim 7, wherein the semiconductor controllers (6, 7, 8) comprise thyristors (A1, A2, B1 B2, C1, C2).

**Revendications**

1. Procédé pour faire fonctionner une machine (1) synchrone au moyen d'un interrupteur (4) triphasé comprenant trois interrupteurs (6, 7, 8) à semi-conducteur et raccordé à un réseau de courant triphasé ayant les stades suivants :

- détermination du déphasage entre la tension de roue polaire de la machine (1) synchrone et la tension du réseau triphasé,
- détermination de la vitesse de rotation du rotor de la machine synchrone,
- détermination de la position en phase du réseau triphasé, c'est-à-dire qu'il est déterminé l'éloignement de l'instant présent au dernier passage par zéro de l'une des tensions de phase,
- détermination d'au moins une partie des courants (21, 22, 23) statoriques de la machine (1) synchrone,
- calcul à l'avance de la courbe de couple de rotation de la machine (1) synchrone pour un laps de temps pouvant être fixé lors de la fermeture d'au moins deux des interrupteurs (6, 7, 8) à semi-conducteur, en tenant compte des valeurs déterminées du déphasage, de la vitesse de rotation, du courant statorique et de la position en phase,
- détermination d'un instant de fermeture à l'aide du calcul préalable, les au moins deux interrupteurs (6, 7, 8) à semi-conducteur étant fermés à l'instant de fermeture.

2. Procédé suivant la revendication 1, dans lequel on détermine à l'aide du calcul préalable si l'instant présent est utilisé comme instant de fermeture.

3. Procédé suivant la revendication 1 ou 2, dans lequel on détermine à partir du calcul préalable un indice de décision et on compare l'indice de décision à une valeur de seuil pouvant être fixée, pour déterminer l'instant de fermeture.

4. Procédé suivant l'une des revendications précédentes, dans lequel on calcul et on prend en compte un courant se produisant au maximum dans le laps de temps qui est obtenu à la fermeture des au moins deux interrupteurs (6, 7, 8) à semi-conducteur pour la détermination de la différence de phase, de la position en phase du courant (21, 22, 23) statorique et de la vitesse de rotation.

5. Procédé suivant l'une des revendications précédentes, dans lequel on effectue un calcul préalable des courbes de couple de rotation à la fois pour la fermeture de tous les interrupteurs (6, 7, 8) à semi-conducteur et pour la fermeture des trois paires de respectivement deux interrupteurs (6, 7, 8) à semi-conducteur.

6. Procédé suivant l'une des revendications précédentes, dans lequel on détermine à l'aide du déphasage et de la vitesse de rotation une valeur maximum du couple de rotation et on tient compte de la valeur maximum du couple de rotation de manière à ne pas effectuer de fermeture des interrupteurs (6, 7, 8) à semi-conducteur si le calcul préalable donne un couple de rotation escompté supérieur à la valeur maximum du couple de rotation.

7. Agencement pour faire fonctionner une machine (1) synchrone, conformé pour effectuer un procédé suivant l'une des revendications précédentes, comprenant

   - un interrupteur (6, 7, 8) triphasé, qui peut être raccordé à un réseau triphasé et qui comprend trois interrupteurs (6, 7, 8) à semi-conducteur pour les phases (A, B, C) du réseau triphasé,
   - un dispositif de détermination du déphasage entre la tension de la roue polaire de la machine synchrone et la tension du réseau triphasé,
   - un dispositif de détermination de la vitesse de rotation du rotor de la machine synchrone,
   - un dispositif de détermination de la position en phase du réseau triphasé, c'est-à-dire qu'il est déterminé l'éloignement de l'instant présent au dernier passage par zéro de l'une des tensions de phase,
   - un dispositif de détermination d'au moins une partie des courants statoriques,
   - un dispositif de commande conformé pour calculer au préalable à partir des valeurs déterminées une courbe de couple de rotation de la machine (1) synchrone pour un laps de temps pouvant être fixé à la fermeture d'au moins une partie des interrupteurs (6, 7, 8) à semi-conducteur, et pour déterminer à l'aide du calcul préalable un instant de fermeture où les interrupteurs (6, 7, 8) à semi-conducteur sont fermés.

8. Agencement suivant la revendication 7, dans lequel les interrupteurs (6, 7, 8) à semi-conducteur comprennent des thyristors (A1, A2, B1, B2, C1, C2).

FIG 1

FIG 2

FIG 3